# EUROPÄISCHE PATENTSCHRIFT

(11) **EP 2 371 611 B1**
(45) Veröffentlichungstag und Bekanntmachung des Hinweises auf die Patenterteilung: **16.05.2012**
(21) Anmeldenummer: 10004252.2
(22) Anmeldetag: 21.04.2010
(51) Int. Cl.: B60L 11/18, H02J 3/00

(54) **Vorrichtung und Verfahren zum kontrollierten Energieaustausch zwischen einem Stromnetz und einem Verbraucher**
Device and method for controlled exchange of energy between a power network and a load
Dispositif et procédé d'échange d'énergie contrôlé entre un secteur et un consommateur

(30) Priorität: 29.03.2010 EP 10003361
(43) Veröffentlichungstag der Anmeldung: 05.10.2011
(73) Patentinhaber: IFS Informationstechnik GmbH, 81671 München (DE)
(72) Erfinder: Frey, Thomas, 85560 Ebersberg (DE); Stulle, Markus, A. Dr., 80797 München (DE)
(74) Vertreter: Joppich, Martin

(56) Entgegenhaltungen:
- DE-U1-202005 012 949
- GB-A- 2 438 979
- US-A1- 2008 281 663

## Beschreibung

Die Erfindung betrifft eine Vorrichtung und ein Verfahren zum kontrollierten Energieaustausch zwischen einem Stromnetz und einem Verbraucher.

Im Zusammenhang mit der fortschreitenden Entwicklung der Elektromobilität entsteht ein wachsender Bedarf an geeigneten Vorrichtungen, die einen kontrollierten Energieaustausch zwischen einem Energieerzeuger und einem Energieverbraucher ermöglichen. Dies gilt insbesondere für Vorrichtungen zum Laden von wiederaufladbaren Batterien.

Aus WO 2000/019580 ist ein Schutzsystem für ein Solarmodul zum Schutz des Solarmoduls gegen Diebstahl oder gegen eine unbefugte Nutzung bekannt. Das Solarmodul kann als Ladevorrichtung für eine wiederaufladbare Batterie verwendet werden. Das Schutzsystem des Solarmoduls umfasst eine solarmodulseitige Unterbrechungseinrichtung und eine verbraucherseitige Freigabeeinrichtung. Zum Schutz gegen eine unbefugte Benutzung des Solarmoduls sendet die solarmodulseitige Unterbrechungseinrichtung der verbraucherseitigen Freigabeeinrichtung über die Energieleitung ein erstes Signal und unterbricht die Energieübertragung der mittels des Solarmoduls erzeugten Energie zu dem Verbraucher über die Energieleitung, wenn die solarmodulseitige Unterbrechungseinrichtung innerhalb einer ersten vorbestimmten Zeit kein zweites Signal von der verbraucherseitigen Freigabeeinrichtung über die Energieleitung empfängt. Die verbraucherseitige Freigabeeinrichtung kann einen Chipkartenleser umfassen. Auf diese Weise kann ein der aufgenommenen Energiemenge entsprechender Geldbetrag von der Chipkarte eines Benutzers sofort abbucht werden.

Eine wichtige Anwendung im Bereich der Elektromobilität sind Batterieladevorrichtungen für Elektrofahrzeuge.

Beim Ladevorgang von Elektrofahrzeugen müssen von der Ladestation verschiedene Parameter eingestellt werden, um die Fahrzeugbatterie mit einer bestimmten Energiemenge in einer bestimmten Zeit aufladen zu können. Zu diesen Parametern zählen insbesondere die Ladespannung und der Ladestrom. Es ist grundsätzlich bekannt, diese Parameter über eine fahrzeugseitige Steuereinheit zu steuern. Aus US 5 049 802 ist hierfür eine fahrzeugseitige Funkeinheit bekannt, die Informationen über den momentanen Ladezustand der Fahrzeugbatterie an die Ladestation sendet.

Die Verrechnung der gelieferten Energiemenge wird beim Ladevorgang von Elektrofahrzeugen von einem Verbrauchszähler erfasst. Bei einem Verbrauchszähler handelt es sich um ein integrierendes Messgerät mit Zählwerk zur Messung der elektrischen Arbeit oder der elektrischen Energiemenge. Gleichwertige Begriffe hierfür sind Elektrizitätszähler, Stromzähler, Energiemengenzähler oder Gebührenzähler.

Aus DE 20 2005 012 949 U1 ist es bekannt, einen Verbrauchszähler mit einem GSM-Modul auszurüsten, um den Zählerstand des Verbrauchszählers an eine Zentrale übermitteln zu können.

Aus EP 2017582 A1 ist es bekannt; Steckdosen mit bargeldlosen Vorab-Bezahlsystemen auszustatten. Unter anderem wird vorgeschlagen, Parkuhren mit derartigen Steckdosen auszurüsten, damit die Batterie eines Elektrofahrzeugs während der Parkzeit über die in der Parkuhr installierte Steckdose geladen werden kann.

In US 2008/0281663 A1 wird ein System zur Verteilung von Energiemengen zwischen einzelnen Verbrauchern beschrieben. Die Verteilung der Energiemengen erfolgt mit dem Ziel, extreme Lastspitzen im Stromnetz zu vermeiden. Auch Elektrofahrzeuge können in das System einbezogen werden, wobei der Nutzer des Elektrofahrzeugs mit einem mobilen Gerät die Möglichkeit hat, den Energieaustausch hinsichtlich bestimmter Parameter zu beeinflussen.

Beim Ladevorgang von Elektrofahrzeugen besteht ein besonderes Problem allerdings darin, dass ein einmal gestarteter Ladevorgang vor Missbrauch nicht geschützt ist. Sobald das Elektrofahrzeug unbeaufsichtigt ist, kann das Ladekabel von einer nicht befugten Person entfernt und für ein anderes Elektrofahrzeug verwendet werden.

Aus GB 2438979 A ist eine Ladesäule für Elektrofahrzeuge bekannt, bei der der Ladevorgang mit einer Nutzer-Kennung gestartet wird und bei der während des Ladevorgangs das Ladekabel in der Ladesäule mechanisch verriegelt wird. Eine derartige Ladesäule ist damit mechanisch vor Missbrauch geschützt. Der Nachteil einer derartigen Ladesäule besteht wiederum darin, dass verhältnismäßig hohe Kosten für den Aufbau eines flächendeckenden Netzes von entsprechend ausgestalteten Ladesäulen aufgewendet werden müssen.

Aufgabe der Erfindung ist es daher, einen flexiblen und gleichzeitig sicheren Ladevorgang von wiederaufladbaren Batterien zu ermöglichen.

Zur Lösung dieser Aufgabe ist eine Vorrichtung zum kontrollierten Energieaustausch zwischen einem Stromnetz und einem Verbraucher vorgesehen, mit einer stationären Ladestation zum Herstellen einer Energieverbindung zwischen dem Stromnetz und einem Versorgungspunkt, wobei die Ladestation einen Ladestations-Controller zum Senden und Empfangen von Steuersignalen über eine Signalübertragungsstrecke umfasst, und mit einer verbraucherseitig installierten SIM-Station zum Herstellen einer Energieverbindung zwischen dem Verbraucher und dem besagten Versorgungspunkt, wobei die SIM-Station einen SIM-Controller zum Senden und Empfangen von Steuersignalen über die Signalübertragungsstrecke umfasst.

Die erfindungsgemäße Lösung ist dadurch gekennzeichnet, dass der SIM-Controller in zeitlichen Abständen über die Signalübertragungsstrecke eine wiederkehrende und eine der SIM-Station zugeordnete SIM-Kennung an den Ladestations-Controller sendet, dass der Ladestations-Controller bei Empfang einer SIM-Kennung eine zwischen dem Stromnetz und dem Verbraucher über die Energieverbindung ausgetauschte Energiemenge auf einen der SIM-Kennung zugeordneten Energiemengenzähler aufaddiert, und dass die zeitlichen Abstände derart bemessen sind, dass die in einem zeitlichen Abstand zwischen dem Stromnetz und dem Verbraucher über die Energieverbindung ausgetauschte Energiemenge unterhalb einer vorgegebenen Messauflösung des Energiemengenzählers liegt.

Eine wesentliche Erkenntnis der Erfindung besteht darin, dass während des Energieaustauschvorgangs seitens des Verbrauchers laufend eine SIM-Kennung an die stationäre Ladestation übertragen wird. SIM ist eine aus dem Mobilfunkbereich bekannte Abkürzung und steht für Subscriber Identification Module. In diesem Zusammenhang steht SIM für jedes denkbare Modul, das in der Lage ist, eine systemweit eindeutige SIM-Kennung zu generieren.

Andere Begriffe für SIM-Kennung sind Identifikationssignal oder Subscriber Identity Number, abgekürzt SIN. Ein Modul, das die besagten Anforderungen erfüllen kann, ist zum Beispiel eine Chipkarte. Das Modul kann aber beispielsweise auch aus einem Fingerabdruck-Lesegerät bestehen.

Die stationäre Ladestation ist in diesem Zusammenhang jede Art von Übergabestelle, bei der elektrische Energie von einem Stromnetz an einen Verbraucher übertragen wird oder bei der umgekehrt elektrische Energie von einem Verbraucher in das Stromnetz eingespeist wird. Die stationäre Ladestation kann stromnetzseitig beispielsweise mit dem üblichen Hausanschluss verschaltet sein, der von einem Energieversorgungsunternehmen gegenüber einem Hausbesitzer bereitgestellt wird.

Der Verbraucher ist in diesem Zusammenhang jede Art von Betriebsmittel, das elektrische Energie benötigt oder das elektrische Energie abgibt, um eine vom Menschen gestellte Aufgabe zu erfüllen.

Der Versorgungspunkt ist in diesem Zusammenhang jede standardisierte Schnittstelle zwischen der Ladestation und dem Verbraucher.

Im Allgemeinen kann die Erfindung für die zeitlich begrenzte Energieversorgung mehrerer Verbraucher über einen dafür vorgesehenen öffentlichen Versorgungspunkt verwendet werden.

Die erfindungsgemäße Vorrichtung kann vorzugsweise als Ladevorrichtung für wiederaufladbare Batterien an dafür vorgesehenen Versorgungspunkten verwendet werden. Bei den Batterien kann es sich beispielsweise um Batterien von Elektrofahrzeugen oder um Batterien von tragbaren elektronischen Geräten handeln. Der Versorgungspunkt ist dann beispielsweise eine herkömmliche 220V-Steckdose, an die verbraucherseitig ein Ladekabel zum Herstellen der Energieverbindung zur Batterie anschließbar ist.

Bei der Verwendung eines Ladekabels kann außerdem die Signalübertragungsstrecke im Bereich der Steckdose mit dem Ladekabel gekoppelt sein. Die Kopplung kann auf der Technologie des sogenannten Powerline Communication Bus (PLC-BUS) basieren. Der PLC-BUS nutzt dabei die Wechselspannung des Stromnetzes als Trägersignal für die zu übertragenden Steuerdaten. Damit kann das Ladekabel sowohl für die bidirektionale Energieübertragung als auch für die bidirektionale Übertragung von Steuersignalen verwendet werden. Der Vorteil der Kopplung besteht unter anderem darin, dass ein Abziehen des Ladekabels von der Steckdose bereits durch eine Überwachung der Signalübertragungsstrecke erkannt werden kann. Mit der Überwachung der Signalübertragungsstrecke kann damit auch die Funktion der Energieverbindung im Bereich der Steckdose überwacht werden.

Die Erfindung ermöglicht für Elektrofahrzeuge einen besonders flexiblen und sicheren Ladevorgang von wiederaufladbaren Batterien. Die mit dem Ladestrom zugeführte Energiemenge wird auf einem Energiemengenzähler verbucht, der in Abhängigkeit von der SIM-Kennung des Elektrofahrzeugs ausgewählt wird. Sobald das Ladekabel von dem Elektrofahrzeug getrennt wird, wird auch der betreffende Energiemengenzähler angehalten. Beim Verbinden des Ladekabels mit einem anderen Elektrofahrzeug wird in Abhängigkeit von der SIM-Kennung ein anderer Energiemengenzähler ausgewählt und gestartet. Ein Missbrauch während eines unbeaufsichtigten Ladevorgangs ist damit ausgeschlossen.

Mit der Erfindung können herkömmliche 220V-Systeme kostengünstig aufgerüstet werden. Es ist zum Beispiel denkbar, dass in privaten oder öffentlichen Parkgaragen entsprechende Steckdosen für Elektroautos bereitgestellt werden. Die Nutzung erfolgt durch einfaches Anschließen des Ladekabels an die Steckdose. In diesem Moment wird aufgrund der SIM-Kennung der Energiemengenzähler des betreffenden Elektrofahrzeugs gestartet und gemäß der verbrauchten Energiemenge belastet. Der gesamte Vorgang der Identifikation und Gebührenzählung kann in der gleichen Weise wie in GSM-Netzen mit der gleichen Sicherheit erfolgen.

Die Erfindung ermöglicht auch eine Umkehrung des Ladevorgangs. Hierbei nutzt der Betreiber des Stromnetzes die Ladekapazität der Fahrzeugbatterie. Dies ist möglich, da jede angeschlossene Fahrzeugbatterie im Netz angemeldet und somit ansteuerbar ist. Die Summe alle angemeldeten Fahrzeugbatterien im Netz kann als großer Energiespeicher vom Netzbetreiber genutzt werden, um Lastspitzen kostengünstig auszugleichen. Sobald dabei Energie aus der Fahrzeugbatterie entnommen wird, führt dies aus der Sicht des Konsumenten zu positiven Geldbeträgen, beispielsweise in Form von Rückerstattungen oder Rabatten. Wird dagegen Energie zugeführt, dann führt dies aus der Sicht des Konsumenten zu negativen Geldbeträgen, beispielsweise in Form von Kontoabbuchungen.

Zum Herstellen der Energieverbindung zwischen dem Stromnetz und dem Versorgungspunkt umfasst die stationäre Ladestation entsprechende Gleichrichter bzw. Wechselrichter, deren Einsatz dem Fachmann geläufig ist. In entsprechender Weise können auch in der batterieseitig installierten SIM-Station zum Herstellen der Energieverbindung zwischen der Batterie und dem Versorgungspunkt entsprechende Gleichrichter bzw. Wechselrichter vorgesehen sein. Falls Energie dem Stromnetz entnommen wird, dann ist ein Netzteil mit Gleichrichter erforderlich, um diese Energie der Batterie zuzuführen. Falls dagegen aus der Batterie Energie entnommen wird, dann ist ein Wechselrichter mit Netzteil erforderlich, um diese Energie in das Stromnetz einzuspeisen.

Die Aufgabe der Erfindung wird in entsprechender Weise durch ein Verfahren zum Energieaustausch zwischen einem Stromnetz und einem Verbraucher gelöst, bei dem über eine stationäre Ladestation eine Energieverbindung zwischen dem Stromnetz und einem Versorgungspunkt hergestellt wird, wobei die Ladestation einen Ladestations-Controller zum Senden und Empfangen von Steuersignalen über eine Signalübertragungsstrecke umfasst, und bei dem über eine verbraucherseitig installierte SIM-Station eine Energieverbindung zwischen dem Verbraucher und dem besagten Versorgungspunkt hergestellt wird, wobei die SIM-Station einen SIM-Controller zum Senden und Empfangen von Steuersignalen über die Signalübertragungsstrecke umfasst.

Die erfindungsgemäße Lösung ist dadurch gekennzeichnet, dass der SIM-Controller in zeitlichen Abständen über die Signalübertragungsstrecke eine wiederkehrende und eine der SIM-Station zugeordnete SIM-Kennung an den Ladestations-Controller sendet, dass der Ladestations-Controller bei Empfang einer SIM-Kennung eine zwischen dem Stromnetz und dem Verbraucher über die Energieverbindung ausgetauschte Energiemenge auf einen der SIM-Kennung zugeordneten Energiemengenzähler aufaddiert, und dass die zeitlichen Abstände derart bemessen sind, dass die in einem zeitlichen Abstand zwischen dem Stromnetz und dem Verbraucher über die Energieverbindung ausgetauschte Energiemenge unterhalb einer vorgegebenen Messauflösung des Energiemengenzählers liegt.

Die beiden erfindungswesentlichen Komponenten der Erfindung sind die SIM-Station und die stationäre Ladestation.

Bei der SIM-Station handelt es sich um eine Komponente der erfindungsgemäßen Vorrichtung zum kontrollierten Energieaustausch zwischen einem Stromnetz und einem Verbraucher, wobei die SIM-Station zum Herstellen einer Energieverbindung zwischen dem Verbraucher und einem stromnetzseitigen Versorgungspunkt geeignet ist und einen SIM-Controller zum Senden und Empfangen von Steuersignalen über eine Signalübertragungsstrecke umfasst.

Die erfindungsgemäße Lösung bei der SIM-Station ist dadurch gekennzeichnet, dass der SIM-Controller in zeitlichen Abständen über die Signalübertragungsstrecke eine wiederkehrende und eine der SIM-Station zugeordnete SIM-Kennung zum Ansteuern eines der SIM-Kennung zugeordneten Energiemengenzählers sendet, und dass die zeitlichen Abstände derart bemessen sind, dass die in einem zeitlichen Abstand zwischen dem Stromnetz und dem Verbraucher über die Energieverbindung ausgetauschte Energiemenge unterhalb einer vorgegebenen Messauflösung des Energiemengenzählers liegt.

Bei der stationären Ladestation handelt es sich um eine Komponente der erfindungsgemäßen Vorrichtung zum kontrollierten Energieaustausch zwischen einem Stromnetz und einem Verbraucher, wobei die stationäre Ladestation zum Herstellen einer Energieverbindung zwischen dem Stromnetz und einem verbraucherseitigen Versorgungspunkt geeignet ist und einen Ladestations-Controller zum Senden und Empfangen von Steuersignalen über eine Signalübertragungsstrecke umfasst.

Die erfindungsgemäße Lösung bei der stationären Ladestation ist dadurch gekennzeichnet, dass die über die Signalübertragungsstrecke empfangenen Steuersignale eine in zeitlichen Abständen wiederkehrende und eine dem Verbraucher zugeordnete SIM-Kennung umfassen, dass der Ladestations-Controller bei Empfang einer SIM-Kennung eine zwischen dem Stromnetz und dem Verbraucher über die Energieverbindung ausgetauschte Energiemenge auf einen der SIM-Kennung zugeordneten Energiemengenzähler aufaddiert, und dass die zeitlichen Abstände derart bemessen sind, dass die in einem zeitlichen Abstand zwischen dem Stromnetz und dem Verbraucher über die Energieverbindung ausgetauschte Energiemenge unterhalb einer vorgegebenen Messauflösung des Energiemengenzählers liegt.

Nach einer bevorzugten Ausführungsform ist vorgesehen, dass die Ladestation eine Ladestations-Messeinheit zum Messen der Energiemenge umfasst, die über die durch die Ladestation führende Energieverbindung ausgetauscht wird. Die Ladestations-Messeinheit ist ein integrierendes Messgerät mit Zählwerk zur Messung der elektrischen Arbeit oder der Energiemenge. Die in dem Zeitintervall zwischen dem Empfang zweier SIM-Kennungen gemessene Energiemenge kann von dem Ladestations-Controller dazu verwendet werden, um erfindungsgemäß die in dem Zeitinvervall gelieferte Energiemenge auf denjenigen Energiemengenzähler aufzuaddieren, der der SIM-Kennung zugeordnet ist.

In entsprechender Weise ist es auch möglich, dass die benötigen Energiemengen-Messwerte von der SIM-Station geliefert werden. In diesem Fall umfasst die SIM-Station eine SIM-Messeinheit zum Messen der Energiemenge, die über die durch die SIM-Station führende Energieverbindung ausgetauscht wird. Auch die SIM-Messeinheit ist ein integrierendes Messgerät mit Zählwerk zur Messung der elektrischen Arbeit oder der Energiemenge. Die in dem Zeitintervall zwischen dem Senden zweier SIM-Kennungen gemessene Energiemenge kann als Messwert von der SIM-Station an die Ladestation gesendet werden. Die Versendung erfolgt im Rahmen der von der SIM-Station an die Ladestation versandten Steuersignale.

Auch eine Kombination beider Ausführungsformen ist möglich. In diesem Fall befindet sich in der Ladestation eine Ladestations-Messeinheit und in der SIM-Station eine SIM-Messeinheit. Wenn beispielsweise im Fall eines Batterieladevorgangs Energie vom Stromnetz zur Batterie übertragen wird, dann verfügt der Ladestations-Controller damit zum einen über einen Messwert seitens der Ladestations-Messeinheit, der der insgesamt abgegebenen Energiemenge entspricht, und zum anderen über einen Messwert seitens der SIM-Messeinheit, der der tatsächlich verbrauchten Energiemenge entspricht. Hiermit ist die Realisierung einer Zusatzsicherung möglich.

Zur Realisierung dieser Zusatzsicherung ist nach einer weiteren bevorzugten Ausführungsform vorgesehen, dass die Ladestation einen ansteuerbaren Hauptschalter umfasst, der zwischen Stromnetz und Versorgungspunkt geschaltet ist.

Als Beispiel soll wieder ein Batterieladevorgang betrachtet werden. Wenn während dieses Ladevorgangs die von der Ladestations-Messeinheit erfassten Messwerte im Vergleich zu den von der SIM-Messeinheit erfassten und seitens des SIM-Controllers gesendeten Messwerten eine vorgegebene Abweichung überschreiten, dann trennt der Ladestations-Controller die Energieverbindung zwischen dem Stromnetz und dem Versorgungspunkt durch Ansteuerung des Hauptschalters. Umgekehrt ermöglicht es die Zusatzsicherung, dass mehrere berechtigte Verbraucher, denen jeweils eine SIM-Kennung zugeordnet ist, gleichzeitig an einer Ladestation angeschlossen werden können.

Wenn es sich bei dem Versorgungspunkt beispielsweise um eine einzelne Steckdose handelt, dann können an diese Steckdose mit einem herkömmlichen Steckdosenverteiler mehrere Verbraucher angeschlossen werden. Wenn ein unberechtigter Konsument einen Verbraucher ohne Zwischenschaltung einer SIM-Station an den Steckdosenverteiler anschließt, kann der Ladestations-Controller von diesem Verbraucher keine gültigen Energiemengen-Messwerte erhalten. Als Folge davon stellt die Ladestation eine Abweichung in der Energiemengenbilanz fest und unterbricht durch Betätigen des Hauptschalters die Stromversorgung für alle angeschlossenen Verbraucher. Daraufhin wird vom Ladestations-Controller wiederholt kontrolliert (beispielsweise mit energiearmen Testströmen), ob die Energiebilanz weiterhin verletzt ist. Erst wenn die Energiemengenbilanz wieder ausgeglichen ist, wird der Hauptschalter zur Übertragung größerer Energiemengen vom Ladestations-Controller wieder geschlossen.

Weitere Einzelheiten und Vorteile der Erfindung werden anhand der folgenden Figuren erläutert. Es zeigt
- Fig. 1: ein Blockschaltbild einer ersten Ausführungsform der Erfindung,
- Fig. 2: ein Blockschaltbild einer zweiten Ausführungsform der Erfindung,
- Fig. 3: ein Blockschaltbild einer dritten Ausführungsform der Erfindung,
- Fig. 4: ein Blockschaltbild einer vierten Ausführungsform der Erfindung,
- Fig. 5: den prinzipiellen Signalfluss zwischen SIM- Controller und Ladestations-Controller bei der sequenziellen Energieversorgung mehrerer Verbraucher, und
- Fig. 6: den prinzipiellen Signalfluss zwischen SIM- Controller und Ladestations-Controller bei der parallelen Energieversorgung mehrerer Verbraucher.

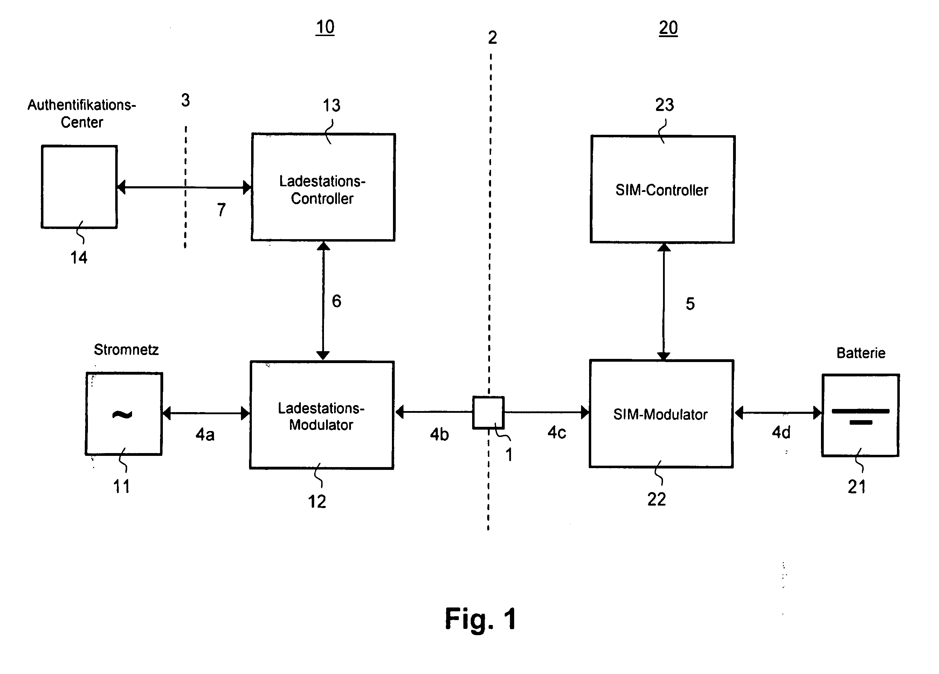

Fig. 1 zeigt ein Blockschaltbild einer ersten Ausführungsform der Erfindung. Diese Ausführungsform erstreckt sich auf eine Ladevorrichtung für eine wiederaufladbare Batterie. Der Energiefluss ist wie bereits beschrieben in beide Richtungen möglich. Die Wirkungspfeile an dem Stromnetz 11 und an der Batterie 21 zeigen daher in beide Richtungen.

Da die Steckdose 1 eine Schnittstelle definiert, orientieren sich die dargestellten Komponenten der Batterieladevorrichtung an der durch die Steckdose 1 gezeichneten Schnittstellenlinie 2.

Links der Schnittstellenlinie 2 befinden sich die Komponenten der Ladestation 10 mit dem Ladestations-Modulator 12, dem Ladestations-Controller 13 und dem Authentifikations-Center (AC) 14. Da das Authentifikations-Center 14 in der Regel für mehrere Ladestationen zuständig ist, ist zusätzlich die Schnittstelle 3 eingezeichnet. Die Ladestation 10 ist über das Kabel 4a mit dem Stromnetz 11 verbunden.

Rechts der Schnittstellenlinie 2 befinden sich die Komponenten der SIM-Station 20 mit dem SIM-Modulator 22 und dem SIM-Controller 23. Die SIM-Station 20 ist über das Kabel 4d mit der Batterie 21 verbunden.

Das Ladekabel 4b, 4c verbindet die Ladestation 10 mit der SIM-Station 20. Der Energiefluss zwischen dem Stromnetz 11 und der Batterie 21 läuft damit über die Kabelkomponenten 4a, 4b, 4c, 4d, von denen die Komponenten 4b und 4c das eigentliche Ladekabel auf beiden Seiten der Steckdose 1 darstellen.

Die Energieverbindung kann im einfachsten Fall dadurch hergestellt werden, indem das Ladekabel 4c in die Steckdose 1 eingesteckt wird. Zusätzlich ist es aber auch möglich, dass der Ladestations-Modulator und/oder der SIM-Modulator Leistungsschalter enthalten, die von dem Ladestations-Controller und/oder dem SIM-Controller angesteuert werden.

Mit dem SIM-Modulator 22 ist über die Steuerleitung 5 der SIM-Controller 23 verbunden. Der SIM-Controller 23 enthält wie das Mobiltelefon in einem GSM-Netz eine SIM-Karte (Subscriber Identity Module), auf der die SIM-Kennung verschlüsselt gespeichert ist.

Auf der anderen Seite ist mit dem Ladestations-Modulator 12 über die Steuerleitung 6 der Ladestations-Controller 13 verbunden. Der Ladestations-Controller 13 übernimmt in entsprechender Weise die gleichen Funktionen, die eine Basisstation zusammen mit einem Authentifikations-Center in einem GSM-Netz ausführt, um einen sich anmeldenden Benutzer im Netz zu identifizieren. Über die Schnittstelle 3 ist der Ladestations-Controller 13 daher in entsprechender Weise mit dem Authentifikations-Center 14 verbunden. Das Authentifikations-Center 14 ist ein hochsicherheitsrelevanter Bereich mit wichtigen Daten aller Ladestations-Controller und SIM-Controller des Netzes und enthält unter anderem die SIM-Kennungen, die jede SIM-Karte eindeutig im Netz identifizieren. Da das Authentifikations-Center 14 sich in der Regel in einer von der Ladestation 10 entfernten Zentrale befindet, ist die Schnittstelle 3 eine für die Fernübertragung geeignete Schnittstelle. Die Leitung 7 kann damit beispielsweise eine ISDN-Leitung, eine GSM-Leitung oder eine DSL-Leitung sein.

Die Signalübertragungsstrecke wird insgesamt durch die Steuerleitung 5, das Ladekabel 4b, 4c und die Steuerleitung 6 gebildet. Auf den Abschnitten 4b, 4c des Ladekabels ist die Signalübertragungsstrecke mit der Energieverbindung, also hier mit dem Ladekabel, gekoppelt.

Sobald die Signalübertragungsstrecke zwischen dem Ladestations-Modulator 12 und dem SIM-Modulator 22 über das Ladekabel 4b, 4c hergestellt ist, sendet der SIM-Controller 23 die SIM-Kennung aus. Der SIM-Modulator 22 moduliert die SIM-Kennung auf das Ladekabel 4b, 4c. In entsprechender Weise demoduliert der Ladestations-Modulator die SIM-Kennung und leitet die SIM-Kennung an den Ladestations-Controller 13 weiter. Die Übertragung der SIM-Kennung vom SIM-Controller 23 zum Ladestations-Controller 13 läuft dabei stets verschlüsselt ab. Hierdurch wird verhindert, dass die SIM-Kennung auf der Signalübertragungsstrecke, insbesondere auf der Strecke 4b, 4c des Ladekabels, von einer unbefugten Person abgegriffen und danach für unbefugte Zwecke verwendet werden kann.

Der Ladestations-Controller 13 verifiziert in einem ersten Schritt die SIM-Kennung über das Authentifikations-Center 14. Handelt es sich um einen im System registrierten Benutzer, dann schaltet der Ladestations-Controller 13 über Leistungsschalter die Energieverbindung zwischen dem Stromnetz 11 und der Batterie 21 frei und steuert außerdem einen Energiemengenzähler an, der der SIM-Kennung zugeordnet ist. Die zu dem Energiemengenzähler zugehörige Messeinheit kann sich an einer beliebigen Stelle auf der Leitung 4a, 4b, 4c, 4d zwischen dem Stromnetz 11 und der Batterie 21 befinden, beispielsweise im Ladestations-Modulator 12 oder in der Steckdose 1. Das Zählwerk des Energiemengenzählers, aufgrund dessen dann die Stromgebühren für die verbrauchte Energiemenge berechnet werden, befindet sich dagegen vorzugsweise im Authentifikations-Center 14 und wird dort zentral verwaltet. Falls Energie vom Stromnetz 11 der Batterie 21 zugeführt wird, dann wird der Zählerstand in dem Energiemengenzähler erhöht. Falls dagegen Energie aus der Batterie 21 entnommen und umgekehrt dem Stromnetz 11 zugeführt wird, dann wird der Zählerstand in dem Energiemengenzähler erniedrigt.

Der SIM-Controller 23 sendet während des Ladevorgangs laufend die SIM-Kennung in kurzen zeitlichen Abständen. Sobald der Ladestations-Controller 13 die SIM-Kennung nicht mehr empfängt, wird die Ansteuerung des entsprechenden Energiemengenzähler gestoppt. Dies kann im einfachsten Fall dadurch geschehen, indem das Ladekabel 4c aus der Steckdose 1 gezogen wird. Es ist aber auch möglich, dass der Benutzer mit dem SIM-Controller 23 über weitere Telekommunikationsmittel verbunden ist und damit die Aussendung der SIM-Kennung beeinflussen kann. In der gleichen Weise ist es möglich, dass der Benutzer über den SIM-Controller 23 einen Leistungsschalter ansteuert, der sich im SIM-Modulator 22 befindet, um die Stromzufuhr zu unterbrechen. Schließlich ist es auch möglich, dass der Benutzer vom SIM-Controller 23 zum Ladestations-Controller 13 Steuersignale sendet, die im Ladestations-Controller eine Schaltaktion auslösen, sodass über im Ladestations-Modulator 12 befindliche Leistungsschalter die Stromzufuhr unterbrochen wird.

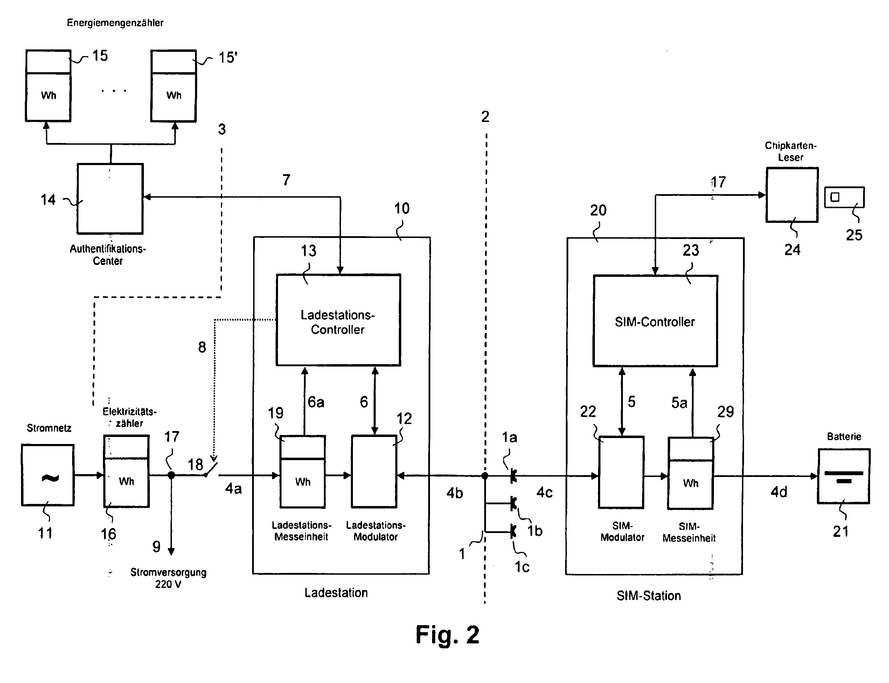

Fig. 2 zeigt ein Blockschaltbild einer zweiten Ausführungsform der Erfindung. Auch diese Ausführungsform erstreckt sich auf eine Ladevorrichtung für eine wiederaufladbare Batterie. Die zweite Ausführungsform ist dabei prinzipiell mit der ersten Ausführungsform identisch, sodass gleiche Komponenten auch mit gleichen Bezugsziffern bezeichnet sind. Mit den zusätzlich eingezeichneten Komponenten kann die Ladevorrichtung der zweiten Ausführungsform von mehreren Konsumenten gleichzeitig benutzt werden. Eine derartige Ladevorrichtung kann demnach als öffentliche Steckdose für die verschiedensten Ladevorgänge eingesetzt werden.

Es besteht bereits jetzt ein Bedarf an öffentlichen Steckdosen, um wiederaufladbare Batterien aufzuladen. Das Problem bei öffentlichen Steckdosen ist die Abrechnung der zur Verfügung gestellten Energiemenge. In Bibliotheken werden öffentliche Steckdosen zum Betreiben von tragbaren Computern in der Regel kostenlos zur Verfügung gestellt. Die hiermit verbundenen Stromkosten müssen dann vom Bibliothektsbetreiber getragen werden. Die Bereitstellung von öffentlichen Steckdosen in Parkgaragen für Elektroautos scheitert bisher daran, dass die verbrauchte Energiemenge nicht abrechenbar ist. Bei den hier verbrauchten Energiemengen ist es für einen Parkgaragenbetreiber im Gegensatz zu einem Bibliotheksbetreiber nicht mehr akzeptabel, dass die öffentlichen Steckdosen wie in einer Bibliothek kostenlos zur Verfügung gestellt werden.

Die zweite Ausführungsform gemäß Fig. 2 stellt eine Lösung dieses Problems dar.

Bei der Steckdose 1 soll es sich demnach um eine öffentliche Steckdose handeln, die von einem Parkgaragenbetreiber für das Laden der Batterien von Elektroautos zur Verfügung gestellt wird. Die Steckdose 1 ist dabei als Dreifachstecker mit den einzelnen Steckdosen 1a, 1b und 1c ausgeführt. An der Steckdose 1 können demnach drei Elektroautos gleichzeitig angeschlossen werden. In Fig. 2 ist nur ein angeschlossenes Elektroauto dargestellt, wobei die Komponenten rechts von der Schnittstellenlinie 2 in dem Elektroauto verbaut sind, also die SIM-Station 20, die Batterie 21 und der Chipkarten-Leser 24 mit einer Chipkarte 25.

Die Komponenten zwischen der Schnittstellenlinie 2 und der Schnittstellenlinie 3 sind im Technikraum der Parkgarage verbaut. Standardmäßig verfügt der Technikraum über einen Hausanschluss zum Stromnetz 11, wobei der Stromverbrauch über einen Elektrizitätszähler 16 in der üblichen Weise abgerechnet wird. Die 220V-Stromversorgung der Parkgarage erfolgt über den Strang 9.

Ausgehend von dieser Infrastruktur ist es leicht möglich, die Komponenten für die erfindungsgemäße Ladevorrichtung nachzurüsten. Hierzu werden hinter dem Haushaltszähler 16 ein Abzweig 17, ein ansteuerbarer Leistungsschalter 18 und die Ladestation 10 vorgesehen. Die Ladestation 10 kann sich dabei in einem Gehäuse befinden, das eine vergleichbare Größe wie das Gehäuse des handelsüblichen Elektrizitätszählers 16 aufweist. Die Ladestation 10 ist auf der Stromnetzseite über das Kabel 4a mit dem Leistungsschalter 18 und auf der Steckdosenseite mit der Steckdose 1 über das Kabel 4b verbunden.

Der Leistungsschalter 18 wird über die Steuerleitung 8 vom Ladestations-Controller 13 angesteuert. Der Leistungsschalter 18 kann dabei auch im Gehäuse der Ladestation 10 integriert sein.

Zum Betreiben der Ladestation 10 muss die Ladestation 10 danach lediglich noch an die Telekommunikationsleitung 7 angeschlossen werden, wobei die Telekommunikationsleitung 7 die Ladestation 10 mit dem entfernt gelegenen Authentifikations-Center 14 verbindet.

Bei der Beschreibung der ersten Ausführungsform gemäß Fig. 1 wurde es offen gelassen, auf welche Weise die Energiemenge bestimmt wird, die laufend auf den der SIM-Kennung zugeordneten Energiemengenzähler aufaddiert wird. Bei der zweiten Ausführungsform gemäß Fig. 2 sind für diesen Zweck eine Ladestations-Messeinheit 19 in der Ladestation 10 und eine SIM-Messeinheit 29 in der SIM-Station 20 vorgesehen.

Bei der Ladestations-Messeinheit 19 und der SIM-Messeinheit 29 handelt es sich jeweils um ein integrierendes Messgerät mit Zählwerk zur Messung der elektrischen Arbeit oder der Energiemenge. Für derartige Messgeräte sind entsprechende integrierte Schaltkreise verfügbar. Von außen werden diese Schaltkreise mit Spannungsteiler-Shunts und Stromwandlern beschaltet. Stromwandler sind Bausteine, die einen Strom in eine dazu proportionale Spannung wandeln, wie z.B. Hall-Sensoren bei Wechsel- und/oder Gleichströmen oder Miniatur-Trafos bei reinen Wechselströmen. Die anliegenden Werte für den gelieferten Strom und die gelieferte Spannung werden in dem Schaltkreis über Analog-Digital-Wandler einer Recheneinheit zur Berechnung der momentan verbrauchten Leistung zugeführt. Das integrierende Zählwerk addiert alle berechneten Leistungswerte über die Zeit auf und liefert damit einen digitalen Wert für die abgegebene Energiemenge.

Die in dem Authentifikations-Center 14 befindlichen Energiemengenzähler, auf die in Abhängigkeit von der SIM-Kennung die Energiemengen laufend aufaddiert werden, sind als Positionen 15 und 15' dargestellt. Da von dem Ladestations-Controller 13 die digitalen Werte der jeweiligen Energiemenge bereits bereitgestellt werden, handelt es sich bei den Energiemengenzählern 15 und 15' um reine Zählwerke ohne weitere Messfunktion. Die Zählwerke können beispielsweise als digitale Konten auf einer Datenverarbeitungsanlage vom Authentifikations-Center 14 verwaltet werden, wobei eine monatliche Abrechnung gegenüber dem jeweiligen Konsumenten ähnlich wie bei Mobiltelefonen im GSM-Netz erfolgt.

Fahrzeugseitig ist die SIM-Station über die Leitung 17 mit einem Chipkarten-Leser 24 verbunden, dem eine SIM-Karte 25 zugeführt werden kann. Hauptaufgabe der SIM-Karte 25 ist die Authentifikation der SIM-Station 20 gegenüber dem Authentifikations-Center 14. Zusätzlich kann vorgesehen sein, dass sich der Nutzer selbst gegenüber der SIM-Karte 25 mit seiner Personal Identification Number (PIN) identifiziert. Neben der Authentifikation kann die SIM-Karte 25 auch noch für verschiedene andere Dienste genutzt werden, insbesondere für die Protokollierung der einzelnen Ladevorgänge.

Für die Ausführung des Chipkarten-Lesers 24 sind verschiedene Varianten denkbar. Eine Variante besteht darin, dass der Chipkartenleser 24 im Gehäuse der SIM-Station 20 integriert ist, wobei das Gehäuse der SIM-Station nicht größer sein muss als das Gehäuse eines einfachen Dreifach-220V-Verteilers.

Eine andere Variante besteht darin, dass das Mobiltelefon des betreffenden Konsumenten einschließlich der in dem Mobiltelefon bereits vorhandenen SIM-Karte für die SIM-Station 20 verwendet wird. Die Verbindung 17 kann dabei leitungsgebunden (z.B. USB) oder alternativ drahtlos (z.B. GSM bzw. W-LAN für längere Distanzen oder Blue-Tooth für kürzere Distanzen) ausgeführt sein. Die SIM-Kennung wird dabei über die Verbindung 17 vom Mobiltelefon an den SIM-Controller 23 verschlüsselt übertragen. Bei dieser Variante ist es möglich, dass das bereits verfügbare Authentifikations-Center des GSM-Betreibers zusätzlich auch vom Stromnetzbetreiber genutzt wird, indem der GSM-Betreiber die Energiemengenzähler 15 und 15' im Auftrag des Stromnetzbetreibers verwaltet. Der Konsument erhält dann mit seiner monatlichen Mobilfunkrechnung die darin integrierte Rechnung für die verbrauchten Energiemengen an öffentlichen Steckdosen.

Der Ladestations-Modulator 12 und der SIM-Modulator 22 basieren vorzugsweise auf der bereits etablierten Technologie des sogenannten Powerline Communication Bus (PLC-BUS). Der PLC-BUS nutzt dabei die Wechselspannung des Stromnetzes als Trägersignal für die zu übertragenden Steuerdaten. Damit kann das Ladekabel 4b, 4c sowohl für die bidirektionale Energieübertragung als auch für die bidirektionale Übertragung von Steuersignalen verwendet werden.

Ohne Beschränkung der Allgemeinheit wird der Energiefluss im Folgenden nur in eine Richtung, also von dem Stromnetz 11 zur Batterie 21, beschrieben. Alle Beschreibungen gelten in entsprechender Weise aber auch für die bereits erwähnte umgekehrte Richtung des Energieflusses, also von der Batterie 21 zum Stromnetz 11.

Die Wirkungspfeile von dem Stromnetz 11 zur Batterie 21 sind demnach einseitig eingezeichnet, weil ein Energiefluss hier nur in einer Richtung vom Stromnetz 11 zur Batterie 21 angenommen wird. Unabhängig davon werden über das Ladekabel 4b, 4c, also zwischen der Ladestation 10 und der SIM-Station 20, allerdings immer auch bidirektionale Steuersignale übertragen. Die Wirkungspfeile zeigen daher auf dieser Teilstrecke in beide Richtungen.

Sobald durch Einstecken des Ladekabels 4c in die Steckdose 1a die Signalübertragungsstrecke zwischen der SIM-Station 20 und der Ladestation 10 hergestellt ist, findet zunächst die Authentifizierung der SIM-Station 20 in der gleichen Weise statt, wie dies bereits bei der ersten Ausführungsform beschrieben wurde. Danach wird von der Ladestation 10 der Leistungsschalter 18 zum Herstellen der Energieverbindung geschlossen.

Gleichzeitig ist es allerdings nunmehr möglich, dass die Batterien von zwei weiteren Elektroautos an die Steckdosen 1b und 1c angeschlossen werden. Um dabei einen Missbrauch auszuschließen, findet in dem Ladestations-Controller 13 ein Abgleich der gemessenen Energiemengen statt.

Die von dem Stromnetz 11 über die Leitung 4a gelieferte Energiemenge wird zunächst von der Ladestations-Messeinheit 19 gemessen und über die Leitung 6a an den Ladestations-Controller weitergeleitet.

Die von jedem Elektroauto zum Laden der jeweiligen Batterie 21 verbrauchte Energiemenge wird darüber hinaus von jeder SIM-Messeinheit 29 gemessen und über die Leitung 5a an den SIM-Controller 23 weitergeleitet. Mit jeder Übertragung einer SIM-Kennung überträgt der SIM-Controller 23 auch den Wert der seit der letzten Übertragung gemessenen Energiemenge an den Ladestations-Controller 13. Im Ladestations-Controller 13 kann damit quasi laufend ein Abgleich der gemessenen Energiemengen stattfinden. Sobald eine vorgegebene Abweichung überschritten wird, steuert der Ladestations-Controller 13 über die Steuerleitung 8 den Leistungsschalter 18 an und unterbricht die Stromversorgung für alle an der öffentlichen Steckdose 1 angeschlossenen Verbraucher. Der Ladestations-Controller 13 und der Ladestations-Modulator 12 verfügen dabei über eine vom Leistungsschalter 18 unabhängige Stromversorgung. Daraufhin wird vom Ladestations-Controller 13 wiederholt kontrolliert (beispielsweise mit energiearmen Testströmen), ob die Energiebilanz weiterhin verletzt ist. Erst wenn die Energiemengenbilanz wieder ausgeglichen ist, wird der Hauptschalter 18 zur Übertragung größerer Energiemengen vom Ladestations-Controller 13 wieder geschlossen.

Die Ursache für die Überschreitung der Abweichung kann insbesondere darin liegen, dass ein Verbraucher an eine der Steckdosen 1a, 1b und 1c angeschlossen wurde, der sich nicht authentifizieren konnte. In diesem Fall wird an die SIM-Controller der übrigen Verbraucher, die vom System bereits authentifiziert waren, eine Nachricht gesendet. Diese Nachricht kann in geeigneter Weise an die betreffenden Konsumenten weitergeleitet werden, beispielsweise durch eine SMS-Nachricht auf das Mobiltelefon des betreffenden Konsumenten. Zusätzlich ist es auch denkbar, dass vor Ort an der öffentlichen Steckdose ein Alarm ausgelöst wird, um unbefugte Konsumenten davon abzuhalten, die öffentliche Steckdose ohne Zwischenschaltung einer SIM-Station zu nutzen oder die bestimmungsgemäße Nutzung der öffentlichen Steckdose zu stören.

Falls der Ladestations-Controller 13 dagegen Abweichungen feststellt, die unterhalb der vorgegebenen Abweichung liegen, dann werden die Verbrauchswerte der einzelnen Verbraucher proportional so verteilt, dass die an die Energiemengenzähler 15, 15' gesendeten Messwerte in der Summe mit der von der Ladestations-Messeinheit 19 gemessenen Energiemenge übereinstimmen.

Durch die Bereitstellung der öffentlichen Steckdose 1 entstehen für den Parkhausbetreiber zunächst höhere Stromkosten, die über den Elektrizitätszähler 16 abgerechnet werden. Zur Rückerstattung dieser Kosten verwaltet das Authentifikations-Center 14 daher innerhalb der Energiemengenzähler 15, 15' auch einen Energiemengenzähler für die Ladestation 10, sodass der Stromnetzbetreiber eine monatliche Abrechnung gegenüber dem Parkhausbetreiber vornehmen kann. Um für den Parkhausbetreiber einen Anreiz zur Installation der öffentlichen Steckdose zu schaffen, wird der Rückerstattungsbetrag dabei über dem tatsächlich verbrauchten Betrag liegen. Auch entsprechende Rabattsysteme ähnlich wie bei der Installation von Solarmodulen sind denkbar.

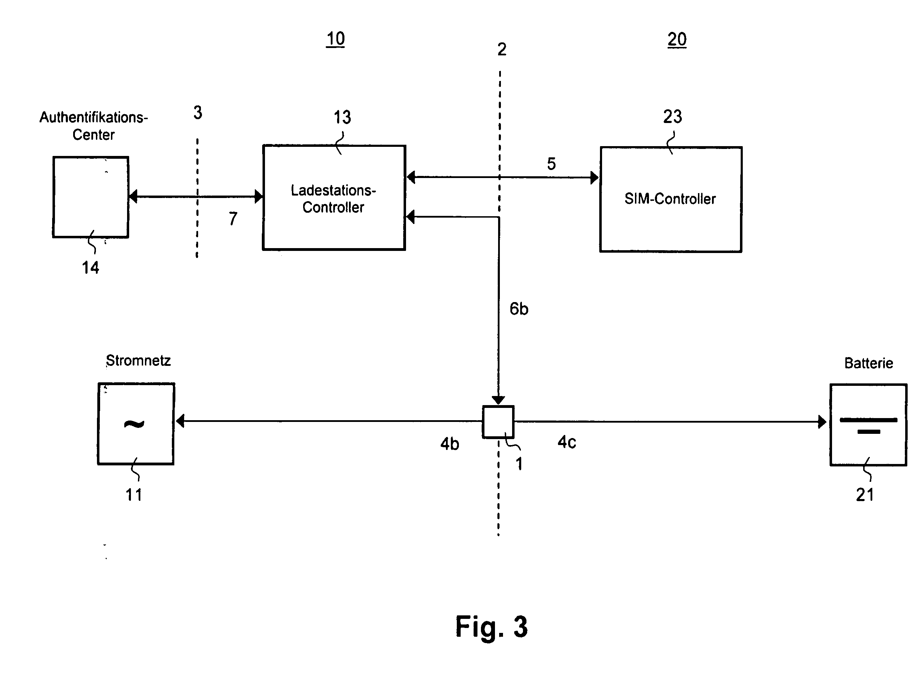

Fig. 3 zeigt ein Blockschaltbild einer dritten Ausführungsform der Erfindung. Wie die erste und die zweite Ausführungsform erstreckt sich auch die dritte Ausführungsform auf eine Ladevorrichtung für eine wiederaufladbare Batterie. Die dritte Ausführungsform stellt allerdings eine Variante der ersten und zweiten Ausführungsform dar, bei der die Übertragung der Steuersignale abseits vom Ladekabel 4b, 4c erfolgt.

Für die Übertragung der Steuersignale zwischen dem Ladestations-Controller 13 und dem SIM-Controller 23 ist eine von dem Ladekabel 4b, 4c getrennte Signalübertragungsstrecke 5 vorgesehen. Die Signalübertragungsstrecke 5 kann dabei leitungsgebunden (z.B. USB) oder alternativ drahtlos (z.B. W-LAN für längere Distanzen oder Blue-Tooth für kürzere Distanzen) ausgeführt sein.

In der Steckdose 1 sind die Messeinheit des Energiemengenzählers und ein Leistungsschalter integriert. Die in Fig. 2 beschriebenen Signale über die Leitungen 6a und 8 werden jetzt über die zwischen der Steckdose 1 und dem Ladestations-Controller 13 verlegte Leitung 6b übertragen.

Alle übrigen Funktionsabläufe der ersten Ausführungsform und der zweiten Ausführungsform lassen sich auf die dritte Ausführungsform übertragen. Alternativ ist es bei der dritten Ausführungsform allerdings auch denkbar, dass die Energie zwischen dem Stromnetz 11 und der Batterie 21 drahtlos übertragen wird. Weitere Einzelheiten zur drahtlosen Energieübertragung werden im Zusammenhang mit der vierten Ausführungsform beschrieben.

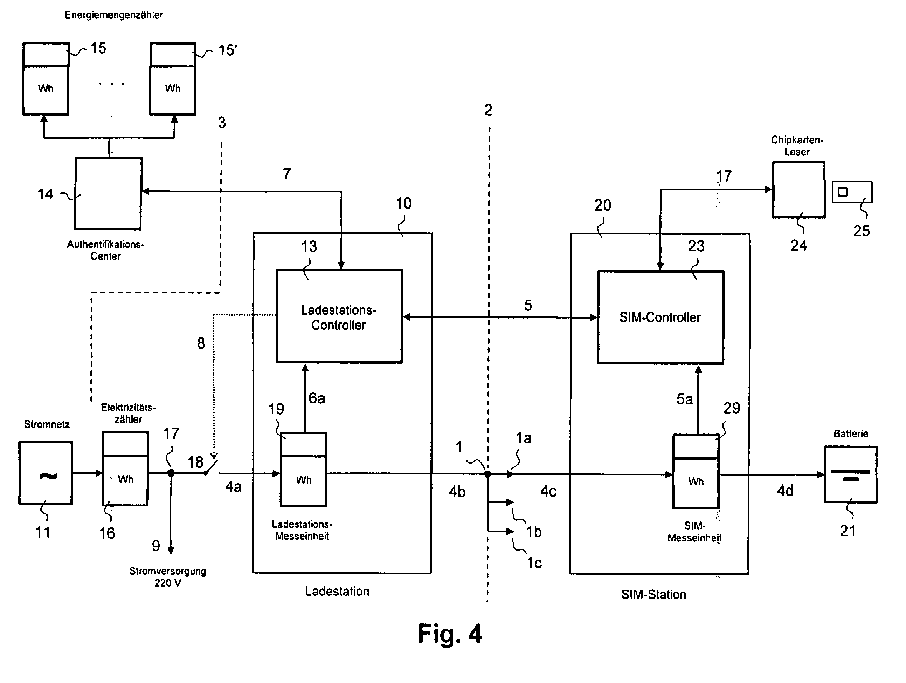

Fig. 4 zeigt ein Blockschaltbild einer vierten Ausführungsform der Erfindung. Auch die vierte Ausführungsform erstreckt sich auf eine Ladevorrichtung für eine wiederaufladbare Batterie. Entsprechend zur zweiten Ausführungsform ist in der Ladestation 10 eine Ladestations-Messeinheit und in der SIM-Station 20 eine SIM-Messeinheit vorgesehen. Die vierte Ausführungsform unterscheidet sich von der zweiten Ausführungsform allerdings wiederum dadurch, dass die Steuersignale abseits von dem Ladekabel 4b, 4c übertragen werden. Die Steuersignale werden demnach nicht mehr wie in Fig. 2 dargestellt über die Leitungen 5, 4c, 4b und 6, sondern direkt über die getrennte Signalübertragungsstrecke 5 übertragen. Auch hier kann die Signalübertragungsstrecke 5 leitungsgebunden (z.B. USB) oder alternativ drahtlos (z.B. W-LAN für längere Distanzen oder Blue-Tooth für kürzere Distanzen) ausgeführt sein.

Alle übrigen Funktionsabläufe der zweiten Ausführungsform lassen sich auf die vierte Ausführungsform übertragen. Alternativ ist es bei der vierten Ausführungsform allerdings auch denkbar, dass die Energie zwischen dem Stromnetz 11 und der Batterie 21 drahtlos übertragen wird. Für die drahtlose Energieübertragung kommen insbesondere induktive Prinzipien in Betracht. Beispielsweise kann sich in einer Parkgarage in der Mitte eines Stellplatzes ein Versorgungspunkt 1 befinden, der aus einer Primärspule besteht, die im Boden eingelassen ist. Am Unterbau des darüber stehenden Elektrofahrzeugs befindet sich eine Sekundärspule, die die aufgenommene Energie über die SIM-Messeinheit 29 an die Batterie 21 abgibt. Die Energieverbindung 4c ist damit drahtlos ausgeführt. Der Versorgungspunkt 1 kann sich auch über mehrere Stellplätze erstrecken, sodass über die Wirkungspfeile 1a, 1b und 1c gleichzeitig Energie an mehrere Elektrofahrzeuge abgegeben werden kann. Die Erfassung des Energiemengenverbrauchs erfolgt dabei wie in der zweiten Ausführungsform bereits beschrieben über die in den SIM-Stationen befindlichen SIM-Messeinheiten 29. Mit jeder Übertragung einer SIM-Kennung wird auch die von der SIM-Messeinheit 29 gemessene Energiemenge an den Ladestations-Controller 13 gesendet. Bei Empfang einer SIM-Kennung addiert der Ladestations-Controller 13 die über die SIM-Station 23 gelieferte Energiemenge auf einen der SIM-Kennung zugeordneten Energiemengenzähler auf. Eine missbräuchliche Energieabnahme wird wie in der zweiten Ausführungsform bereits beschrieben über einen in dem Ladestations-Controller 13 stattfindenden Energiemengenabgleich verhindert, indem bei einer Verletzung der Energiemengenbilanz der Hauptschalter 18 geöffnet und die Energieübertragung über den Versorgungspunkt 1 unterbrochen wird.

Auch im Rahmen der drahtlosen Energieübertragung ist es denkbar, dass die Signalübertragungsstrecke im Bereich des Versorgungspunkts 1 mit der Energieverbindung gekoppelt ist. Die Steuersignale werden dann unter Einsatz entsprechender Modulatoren zwischen dem SIM-Controller 23 und dem Versorgungspunkt 1 drahtlos und zwischen dem Versorgungspunkt 1 und dem Ladestations-Controller 13 über das Ladekabel 4b übertragen. Ähnlich wie bei der bereits beschriebenen Kopplung zwischen Signalübertragungsstrecke und Ladekabel besteht der Vorteil der Kopplung darin, dass ein Wegfahren des Elektrofahrzeugs vom Versorgungspunkt bereits durch eine Überwachung der Signalübertragungsstrecke erkannt werden kann. Mit der Überwachung der Signalübertragungsstrecke kann somit die Position des Elektrofahrzeugs und damit auch die Funktion der Energieverbindung im Bereich des Versorgungspunkts 1 überwacht werden.

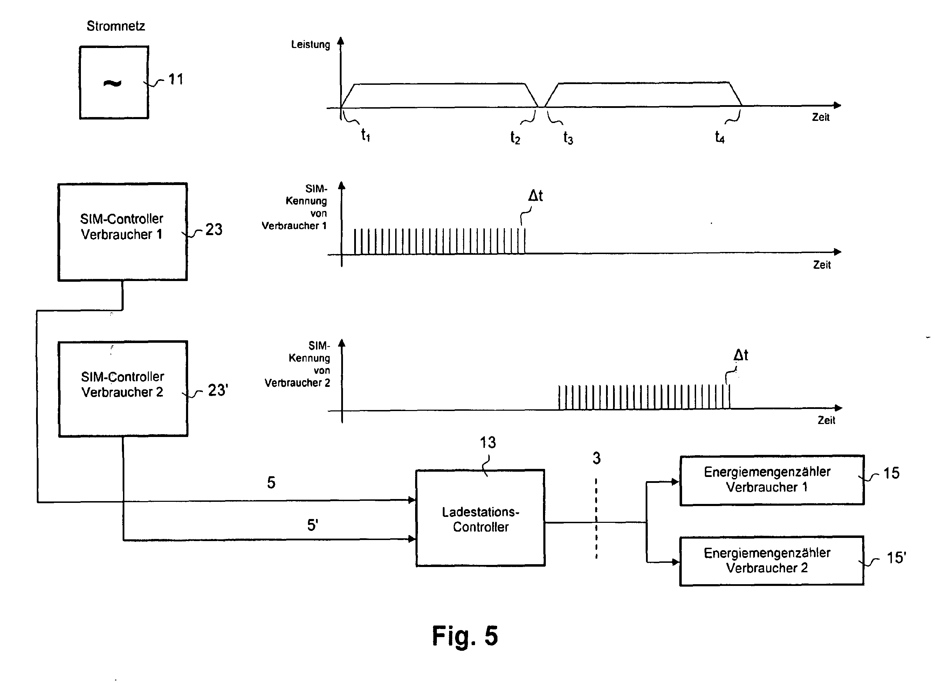

Fig. 5 zeigt den prinzipiellen Signalfluss zwischen SIM-Controller und Ladestations-Controller bei der sequenziellen Energieversorgung mehrerer Verbraucher. Bei den Verbrauchern kann es sich beispielsweise um wiederaufladbare Batterien handeln. Zunächst wird der Verbraucher 1 zum Zeitpunkt t₁ an eine öffentliche Steckdose angeschlossen und zum Zeitpunkt t₂ wieder von der öffentlichen Steckdose getrennt. Vom Stromnetz 11 wird in dem Zeitraum t₂-t₁ die Energiemenge bereitgestellt, die der Fläche unter dem trapezförmigen Verlauf in dem Leistungs-Zeit-Diagramm zwischen den Zeitpunkten t₁ und t₂ entspricht.

Unmittelbar nach dem Zeitpunkt t₁ erfolgt zunächst die Authentisierung des Verbrauchers 1. Danach sendet der SIM-Controller 23 des Verbrauchers 1 in zeitlichen Abständen Δt über die Signalübertragungsstrecke 5 an den Ladestations-Controller 13 die wiederkehrende und der SIM-Station zugeordnete SIM-Kennung. Bei Empfang einer SIM-Kennung addiert der Ladestations-Controller 13 die in dem zeitlichen Abstand Δt an den Verbraucher 1 gelieferte Energiemenge auf den Energiemengenzähler 15 auf, wobei der Energiemengenzähler 15 der SIM-Kennung des Verbrauchers 1 zugeordnet ist. Die Addition kann auch erst in dem Ladestations-Controller 13 zwischengespeichert werden. Diese Zwischenspeicherung hat die gleiche Wirkung wie das direkte Aufaddieren auf einen der SIM-Kennung zugeordneten Energiemengenzähler. Nach Beendigung der Energieübertragung wird dann zum Zeitpunkt t₂ die zunächst zwischengespeicherte und jetzt bereits insgesamt aufaddierte Energiemenge auf den Energiemengenzähler 15 des Verbrauchers 1 aufaddiert.

Der zeitliche Abstand Δt bestimmt die Messauflösung des Energiemengenzählers 15. Unter der Messauflösung wird dabei die kleinste anzeigbare Änderung bei der Anzeige der Energiemenge auf einem Energiemengenzähler verstanden. Wenn es sich bei den Energiemengenzählern 15, 15' um geeichte Messgeräte handelt, ist die Messauflösung in der Regel aufgrund gesetzlicher Vorgaben vorgegeben, wobei die einzuhaltende Messauflösung wiederum eine Funktion des Zählerstands sein kann.

Die zeitlichen Abstände Δt werden von der erfindungsgemäßen Ladevorrichtung derart bemessen, dass die in einem zeitlichen Abstand Δt über die SIM-Station gelieferte Energiemenge unterhalb einer vorgegebenen Messauflösung des Energiemengenzählers liegt. Die vorgegebene Messauflösung entspricht dabei vorzugsweise der Messauflösung aufgrund gesetzlicher Vorgaben. Auf der anderen Seite ist es nicht erforderlich, die zeitlichen Abstände Δt deutlich unterhalb der gesetzlichen Vorgaben zu bemessen, da dann die Rechenkapazitäten der SIM-Controller 23, 23' und des Ladestations-Controllers 13 unnötig belastet werden bzw. durch zusätzlich erforderliche Rechenkapazitäten unnötige Kosten entstehen. Man kann davon ausgehen, dass mit den üblicherweise verfügbaren Rechenkapazitäten zeitliche Abstände Δt in einem Bereich von einigen Zehntel-Sekunden zu noch vertretbaren Kosten realisiert werden können. Zur Optimierung ist es auch denkbar, dass die zeitlichen Abstände Δt nicht regelmäßig, sondern von SIM-Kennung zu SIM-Kennung variabel ausgelegt und adaptiv berechnet werden. Es ist auch denkbar, dass die in den zeitlichen Abständen Δt gemessenen Energiemengen durch geeignete Algorithmen über die Zeit interpoliert und/oder gefiltert werden. Insgesamt entsprechen dabei die Zusammenhänge zwischen dem tatsächlichen Energiemengenverbrauch der jeweiligen Verbraucher und dem vom Ladestations-Controller 13 erfassten Energiemengenverbrauch den Gesetzmäßigkeiten zwischen einem analogen Messsignal und den durch einen Analog-Digital-Wandler einem Prozessor zugeführten digitalen Messwerten. Die zeitlichen Abstände Δt entsprechen dabei dann der Abtastrate des Analog-DigitalWandlers. Alle aus der Messtechnik bekannten Gesetzmäßigkeiten zur Behandlung von analog zu digital gewandelten Messwerten sind daher auf die von dem Ladestations-Controller verwalteten Energiemengen-Messwerte entsprechend anwendbar, wie beispielsweise die Anti-Aliasing-Filterung, die Bemessung der Abtastrate oder die Prädiktion zukünftiger Messwerte.

Zum Zeitpunkt t₃ wird der Verbraucher 2 an die öffentliche Steckdose angeschlossen und wird zum Zeitpunkt t₄ von der öffentlichen Steckdose wieder getrennt. Vom Stromnetz 11 wird in dem Zeitraum t₄-t₃ dabei die Energiemenge bereitgestellt, die der Fläche unter dem trapezförmigen Verlauf in dem Leistungs-Zeit-Diagramm zwischen den Zeitpunkten t₃ und t₄ entspricht. Die Übertragung der SIM-Kennungen von Verbraucher 2 erfolgt über die Signalübertragungsstrecke 5'. Die gemessenen Energiemengen werden vom Ladestations-Controller 13 auf den Energiemengenzähler 15' aufaddiert. Ansonsten ist der Funktionsablauf zu dem bereits mit Bezug zum Verbraucher 1 beschriebenen Funktionsablauf identisch.

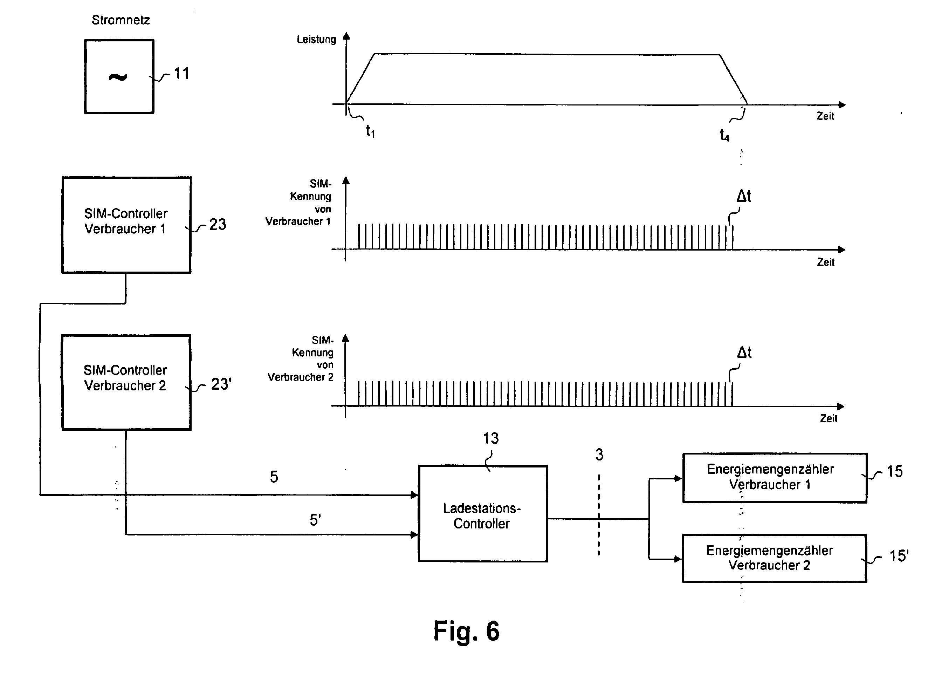

Fig. 6 zeigt den prinzipiellen Signalfluss zwischen SIM-Controller und Ladestations-Controller bei der parallelen Energieversorgung mehrerer Verbraucher. Bei den Verbrauchern kann es sich beispielsweise um wiederaufladbare Batterien handeln. Der Unterschied zu dem in Fig. 5 dargestellten Signalfluss besteht darin, dass der Verbraucher 1 und der Verbraucher 2 zum Zeitpunkt t₁ über einen Verteilerstecker gleichzeitig an die öffentliche Steckdose angeschlossen werden. Beide Verbraucher werden zum Zeitpunkt t₄ auch gleichzeitig wieder von der öffentlichen Steckdose getrennt. Vom Stromnetz 11 wird in dem Zeitraum t₄-t₁ dabei die Energiemenge bereitgestellt, die der Fläche unter dem trapezförmigen Verlauf in dem Leistungs-Zeit-Diagramm zwischen den Zeitpunkten t₁ und t₄ entspricht. Seitens des Stromnetzes 11 kann dabei nicht unterschieden werden, ob die Energiemenge an den Verbraucher 1 oder an den Verbraucher 2 geliefert wird. Die Unterscheidung erfolgt dadurch, dass in den SIM-Controllern 23 und 23' jeweils SIM-Messeinheiten integriert sind, so wie dies gemäß der zweiten Ausführungsform gemäß Fig. 2 beschrieben ist. Die von den SIM-Messeinheiten erfassten Messwerte werden zusammen mit den SIM-Kennungen über die Signalübertragungsstrecken 5 und 5' an den Ladestations-Controller 13 übertragen und dann vom Ladestations-Controller 13 auf die Energiemengenzähler 15 und 15' entsprechend aufaddiert. Ansonsten ist der Funktionsablauf zu dem bereits mit Bezug zu Fig. 4 beschriebenen Funktionsablauf identisch.

Die erfindungsgemäße Ladevorrichtung ermöglicht die Realisierung weiterer Sicherungsmaßnahmen bei der Ladung von wiederaufladbaren Batterien an öffentlichen Steckdosen.

Eine wichtige Sicherungsmaßnahme betrifft die Sicherung gegen das unerlaubte Abziehen des Ladekabels während des Ladevorgangs. Diese Sicherung kann vom Benutzer nach dem Starten des Ladevorgangs zusätzlich aktiviert werden. Soweit es sich um das Laden der Batterie eines Elektroautos handelt, kann die Aktivierung mit dem Abschließen des Elektroautos und die Deaktivierung mit dem Aufschließen des Elektroautos gekoppelt werden. Falls das Ladekabel bei verschlossenem Elektroauto abgezogen wird, dann kann ein Alarm wie bei einer handelsüblichen Kfz-Diebstahlsicherung ausgelöst werden. Zusätzlich oder alternativ kann auch eine entsprechende SMS-Nachricht auf das Mobiltelefon des betreffenden Konsumenten gesendet werden. Außerdem ist es denkbar, dass der SIM-Controller gesperrt wird und nur durch Eingabe der PIN des betreffenden Konsumenten wieder aktiviert werden kann.

Wenn die SIM-Kennungen über das Ladekabel übertragen werden, dann kann das Abziehen des Ladekabels sofort und zuverlässig seitens des Ladestations-Controllers erkannt werden, da das Protokoll zur Übertragung der SIM-Kennungen auf unzulässige Weise unterbrochen wird. Wenn die SIM-Kennungen abseits vom Ladekabel übertragen werden, dann muss auf der Strecke des Ladekabels eine zusätzliche Einheit vorgesehen werden, die das Abziehen des Ladekabels erkennt.

Zur Optimierung des Ladevorgangs ist es außerdem zweckmäßig, dass zwischen dem SIM-Controller 23 und dem Ladestations-Controller 13 Steuersignale ausgetauscht werden, die den Ladevorgang selber betreffen, wie dies beispielsweise in der US 5 049 802 beschrieben ist. Die Steuerung des Ladezustand kann auch in Abhängigkeit von der Zeit erfolgen, um zum Beispiel günstige Nachttarife ausnutzen zu können. Außerdem kann der Ladezustand der Batterie zweckmäßigerweise auf das Mobiltelefon des betreffenden Konsumenten übertragen werden.

## Patentansprüche

1. Vorrichtung zum kontrollierten Energieaustausch zwischen einem Stromnetz und einem Verbraucher,
mit einer stationären Ladestation (10) zum Herstellen einer Energieverbindung zwischen dem Stromnetz (11) und einem Versorgungspunkt, wobei die Ladestation (10) einen Ladestations-Controller (13) zum Senden und Empfangen von Steuersignalen über eine Signalübertragungsstrecke umfasst, und
mit einer verbraucherseitig installierten SIM-Station (20) zum Herstellen einer Energieverbindung zwischen dem Verbraucher und dem besagten Versorgungspunkt, wobei die SIM-Station (20) einen SIM-Controller (23) zum Senden und Empfangen von Steuersignalen über die Signalübertragungsstrecke umfasst,
**dadurch gekennzeichnet,**
**dass** der SIM-Controller (23) in zeitlichen Abständen über die Signalübertragungsstrecke eine wiederkehrende und eine der SIM-Station zugeordnete SIM-Kennung an den Ladestations-Controller (13) sendet,
**dass** der Ladestations-Controller (13) bei Empfang einer SIM-Kennung eine zwischen dem Stromnetz (11) und dem Verbraucher über die Energieverbindung ausgetauschte Energiemenge auf einen der SIM-Kennung zugeordneten Energiemengenzähler (15, 15') aufaddiert, und
**dass** die zeitlichen Abstände derart bemessen sind, dass die in einem zeitlichen Abstand zwischen dem Stromnetz (11) und dem Verbraucher über die Energieverbindung ausgetauschte Energiemenge unterhalb einer vorgegebenen Messauflösung des Energiemengenzählers liegt.

2. Vorrichtung nach Anspruch 1, **dadurch gekennzeichnet, dass** die Ladestation (10) eine Ladestations-Messeinheit (19) zum Messen der Energiemenge umfasst, die über die durch die Ladestation führende Energieverbindung ausgetauscht wird.

3. Vorrichtung nach einem der Ansprüche 1 - 2, **dadurch gekennzeichnet, dass** die SIM-Station (20) eine SIM-Messeinheit (29) zum Messen der Energiemenge umfasst, die über die durch die SIM-Station führende Energieverbindung ausgetauscht wird.

4. Vorrichtung nach Anspruch 3, **dadurch gekennzeichnet, dass** die von der SIM-Station (20) an die Ladestation (10) gesandten Steuersignale die von der SIM-Messeinheit (29) erfassten Messwerte umfassen.

5. Vorrichtung nach Anspruch 4, **dadurch gekennzeichnet, dass** die Ladestation einen ansteuerbaren Hauptschalter (18) umfasst, der zwischen Stromnetz und Versorgungspunkt geschaltet ist.

6. Vorrichtung nach Anspruch 5, **dadurch gekennzeichnet, dass** der Ladestations-Controller (13) die Energieverbindung zwischen dem Stromnetz (11) und dem Versorgungspunkt durch Ansteuerung des Hauptschalters (18) trennt, wenn die von der Ladestations-Messeinheit (19) erfassten Messwerte im Vergleich zu den von der SIM-Messeinheit (29) erfassten und seitens des SIM-Controllers (23) gesendeten Messwerten eine vorgegebene Abweichung überschreiten.

7. Vorrichtung nach einem der Ansprüche 1 - 6, **dadurch gekennzeichnet, dass** der Verbraucher eine wiederaufladbare Batterie (21) ist.

8. Vorrichtung nach Anspruch 7, **dadurch gekennzeichnet, dass** der Versorgungspunkt eine Steckdose (1) ist, an die verbraucherseitig ein Ladekabel (4c) zum Herstellen der Energieverbindung zur Batterie (21) anschließbar ist.

9. Vorrichtung nach Anspruch 8, **dadurch gekennzeichnet, dass** die Signalübertragungsstrecke im Bereich der Steckdose (1) mit dem Ladekabel (4c) gekoppelt ist.

10. Verfahren zum Energieaustausch zwischen einem Stromnetz und einem Verbraucher,
bei dem über eine stationäre Ladestation eine Energieverbindung zwischen dem Stromnetz und einem Versorgungspunkt hergestellt wird, wobei die Ladestation einen Ladestations-Controller zum Senden und Empfangen von Steuersignalen über eine Signalübertragungsstrecke umfasst, und
bei dem über eine verbraucherseitig installierte SIM-Station eine Energieverbindung zwischen dem Verbraucher und dem besagten Versorgungspunkt hergestellt wird, wobei die SIM-Station einen SIM-Controller zum Senden und Empfangen von Steuersignalen über die Signalübertragungsstrecke umfasst,
**dadurch gekennzeichnet,**
**dass** der SIM-Controller in zeitlichen Abständen über die Signalübertragungsstrecke eine wiederkehrende und eine der SIM-Station zugeordnete SIM-Kennung an den Ladestations-Controller sendet,
**dass** der Ladestations-Controller bei Empfang einer SIM-Kennung eine zwischen dem Stromnetz und dem Verbraucher über die Energieverbindung ausgetauschte Energiemenge auf einen der SIM-Kennung zugeordneten Energiemengenzähler aufaddiert, und
**dass** die zeitlichen Abstände derart bemessen sind, dass die in einem zeitlichen Abstand zwischen dem Stromnetz und dem Verbraucher über die Energieverbindung ausgetauschte Energiemenge unterhalb einer vorgegebenen Messauflösung des Energiemengenzählers liegt.

11. SIM-Station einer Vorrichtung zum kontrollierten Energieaustausch zwischen einem Stromnetz und einem Verbraucher nach einem der Ansprüche 1 bis 9, wobei die SIM-Station zum Herstellen einer Energieverbindung zwischen dem Verbraucher und einem stromnetzseitigen Versorgungspunkt geeignet ist und einen SIM-Controller zum Senden und Empfangen von Steuersignalen über eine Signalübertragungsstrecke umfasst,
**dadurch gekennzeichnet,**
**dass** der SIM-Controller in zeitlichen Abständen über die Signalübertragungsstrecke eine wiederkehrende und eine der SIM-Station zugeordnete SIM-Kennung zum Ansteuern eines der SIM-Kennung zugeordneten Energiemengenzählers sendet, und
**dass** die zeitlichen Abstände derart bemessen sind, dass die in einem zeitlichen Abstand zwischen dem Stromnetz und dem Verbraucher über die Energieverbindung ausgetauschte Energiemenge unterhalb einer vorgegebenen Messauflösung des Energiemengenzählers liegt.

12. Stationäre Ladestation einer Vorrichtung zum kontrollierten Energieaustausch zwischen einem Stromnetz und einem Verbraucher nach einem der Ansprüche 1 bis 9, wobei die stationäre Ladestation zum Herstellen einer Energieverbindung zwischen dem Stromnetz und einem verbraucherseitigen Versorgungspunkt geeignet ist und einen Ladestations-Controller zum Senden und Empfangen von Steuersignalen über eine Signalübertragungsstrecke umfasst,
**dadurch gekennzeichnet,**
**dass** die über die Signalübertragungsstrecke empfangenen Steuersignale eine in zeitlichen Abständen wiederkehrende und eine dem Verbraucher zugeordnete SIM-Kennung umfassen,
**dass** der Ladestations-Controller bei Empfang einer SIM-Kennung eine zwischen dem Stromnetz und dem Verbraucher über die Energieverbindung ausgetauschte Energiemenge auf einen der SIM-Kennung zugeordneten Energiemengenzähler aufaddiert, und
**dass** die zeitlichen Abstände derart bemessen sind, dass die in einem zeitlichen Abstand zwischen dem Stromnetz und dem Verbraucher über die Energieverbindung ausgetauschte Energiemenge unterhalb einer vorgegebenen Messauflösung des Energiemengenzählers liegt.

## Claims

1. Apparatus for the controlled energy exchange between a main power grid and a consumer,
with a stationary charging station (10) for establishing an energy link between the main power grid (11) and a supply point, wherein the charging station (10) comprises a charging station controller (13) for sending and receiving control signals via a signal transmission link, and
with a consumer-side installed SIM-station (20) for establishing an energy link between the consumer and said supply point, wherein the SIM-station (20) comprises a SIM-controller (23) for sending and receiving control signals via the signal transmission link,
**characterized in,**
**that** the SIM-controller (23) sends at time intervals via the signal transmission link to the charging station controller (13) a recurring SIM-identifier being assigned to the SIM-station,
**that** the charging station controller (13) upon receipt of a SIM-identifier adds up to an electricity meter (15, 15') being assigned to the SIM-identifier an amount of energy which has been exchanged between the main power grid (11) and the consumer via the energy link, and
**that** the time intervals are dimensioned such that the amount of energy which has been exchanged in a time interval between the main power grid (11) and the consumer via the energy link is below of a predetermined metering resolution of the electricity meter.

2. Apparatus according to claim 1, **characterized in that** the charging station (10) comprises a charging station measuring unit (19) for measuring the amount of energy which is exchanged via the energy link leading through the charging station.

3. Apparatus according to any of the claims 1 - 2, **characterized in that** the SIM-station (20) comprises a SIM measuring unit (29) for measuring the amount of energy which is exchanged via the energy link leading through the SIM-station.

4. Apparatus according to claim 3, **characterized in that** the control signals sent from the SIM-station (20) to the charging station (10) comprise the measured values collected by the SIM measuring unit (29).

5. Apparatus according to claim 4, **characterized in that** the charging station comprises a controllable main switch (18) which is connected between the main power grid and the supply point.

6. Apparatus according to claim 5, **characterized in that** the charging station controller (13) disconnects the energy link between the main power grid (11) and the supply point by control of the main switch (18), if the measurement values collected by the charging station measuring unit (19) fall below a predetermined tolerance compared to the measurement values collected by the SIM measuring unit (29) and sent by the SIM-controller (23).

7. Apparatus according to any of the claims 1 - 6, **characterized in that** the consumer is a rechargeable battery (21).

8. Apparatus according to claim 7, **characterized in that** the supply point is an electrical socket (1) to which a consumer-side charging cable (4c) can be connected for establishing the energy link.

9. Apparatus according to claim 8, **characterized in that** the signal transmission link is coupled with the charging cable (4c) in the area of the electrical socket (1).

10. Method for the energy exchange between a main power grid and a consumer,
in which via a stationary charging station an energy link between the main power grid and a supply point is established, wherein the charging station comprises a charging station controller for sending and receiving control signals via a signal transmission link, and
in which via a consumer-side installed SIM-station an energy link between the consumer and said supply point is established, wherein the SIM-station comprises a SIM-controller for sending and receiving control signals via the signal transmission link,
**characterized in,**
**that** the SIM-controller sends at time intervals via the signal transmission link to the charging station controller a recurring SIM-identifier being assigned to the SIM-station,
**that** the charging station controller upon receipt of a SIM-identifier adds up to an electricity meter being assigned to the SIM-identifier an amount of energy which has been exchanged between the main power grid and the consumer via the energy link, and
**that** the time intervals are dimensioned such that the amount of energy which has been exchanged in a time interval between the main power grid and the consumer via the energy link is below of a predetermined metering resolution of the electricity meter.

11. SIM-station of an apparatus for the controlled energy exchange between a main power grid and a consumer according to any of the claims 1 - 9, wherein the SIM-station is arranged for establishing an energy link between a consumer an a main power grid-sided supply point and comprises a SIM-controller for sending and receiving control signals via a signal transmission link,
**characterized in,**
**that** the SIM-controller sends at time intervals via the signal transmission link to the charging station controller a recurring SIM-identifier being assigned to the SIM-station for control of an electricity meter being assigned to SIM-identifier, and
**that** the time intervals are dimensioned such that the amount of energy which has been exchanged in a time interval between the main power grid and the consumer via the energy link is below of a predetermined metering resolution of the electricity meter.

12. Stationary charging station of an apparatus for the controlled energy exchange between a main power grid and a consumer according to any of the claims 1 - 9, wherein the stationary charging station is arranged for establishing an energy link between the main power grid and a consumer-sided supply point and comprises a charging station controller for sending and receiving control signals via a signal transmission link,
**characterized in,**
**that** the control signals received via the signal transmission link comprise a SIM-identifier which recurs at time intervals and which is assigned to the consumer,
**that** the charging station controller upon receipt of a SIM-identifier adds up to an electricity meter being assigned to the SIM-identifier an amount of energy which has been exchanged between the main power grid and the consumer via the energy link, and
**that** the time intervals are dimensioned such that the amount of energy which has been exchanged in a time interval between the main power grid and the consumer via the energy link is below of a predetermined metering resolution of the electricity meter.

## Revendications

1. Dispositif d'échange d'énergie contrôlé entre un réseau électrique et un consommateur,
avec une station de charge stationnaire (10), pour établir une liaison d'énergie entre le réseau électrique (11) et un point d'alimentation, la station de charge (10) comprenant un contrôleur de station de charge (13), pour envoyer et recevoir des signaux de commande sur une ligne de transmission de signaux, et
avec une station SIM (20), installée côté consommateur, pour établir une liaison d'énergie entre le consommateur et ledit point d'alimentation, la station SIM (20) comprenant un contrôleur SIM (23), pour envoyer et recevoir des signaux de commande par l'intermédiaire de la ligne de transmission de signaux,
**caractérisé en ce que**
le contrôleur SIM (23) envoie au contrôleur de station de charge (13), selon des espacements temporels, sur la ligne de transmission de signaux, une identification SIM répétitive et une identification SIM associée à la station de charge,
**en ce que** le contrôleur de station de charge (13), à réception d'une identification SIM, additionne une quantité d'énergie, échangée par l'intermédiaire de la liaison d'énergie, entre le réseau électrique (11) et le consommateur, à un compteur de quantité d'énergie (15, 15') associé à l'identification SIM, et
et **en ce que** les espacements temporels sont de valeur telle que la quantité d'énergie, échangée par l'intermédiaire de la liaison d'énergie dans un espacement temporel entre le réseau électrique (11) et le consommateur, est inférieure à une résolution de mesure du compteur de quantité d'énergie.

2. Dispositif selon la revendication 1, **caractérisé en ce que** la station de charge (10) comprend une unité de mesure de station de charge (19), pour mesurer la quantité d'énergie échangée par l'intermédiaire de la liaison d'énergie passant par la station de charge.

3. Dispositif selon l'une des revendications 1 à 2, **caractérisé en ce que** la station SIM (20) comprend une unité de masure SIM (29), pour mesurer la quantité d'énergie échangée par l'intermédiaire de la liaison d'énergie passant par la station SIM.

4. Dispositif selon la revendication 3, **caractérisé en ce que** les signaux de commande envoyés par la station SIM (20) à la station de charge (10) comprennent les valeurs de mesure appréhendées par l'unité de mesure SIM (29).

5. Dispositif selon la revendication 4, **caractérisé en ce que** la station de charge comprend un interrupteur principal (18) susceptible d'être commandé, branché entre le réseau électrique et le point d'alimentation.

6. Dispositif selon la revendication 5, **caractérisé en ce que** le contrôleur de station de charge (13) coupe, par une commande de l'interrupteur principal (18), la liaison d'énergie entre le réseau électrique (11) et le point d'alimentation, lorsque les valeurs de mesure appréhendées par l'unité de mesure de station de charge (19) dépassent un écart prédéterminé par rapport aux valeurs de mesure appréhendées par l'unité de mesure SIM (29) et envoyées du côté du contrôleur SIM (23).

7. Dispositif selon l'une des revendications 1 à 6, **caractérisé en ce que** le consommateur est une batterie rechargeable (21).

8. Dispositif selon la revendication 7, **caractérisé en ce que** le consommateur est une prise de courant (1), à laquelle, côté consommateur, un câble de charge (4c) peut être raccordé pour établir la liaison d'énergie à la batterie (21).

9. Dispositif selon la revendication 8, **caractérisé en ce que** la ligne de transmission de signaux est couplée au câble de charge (4c) dans la zone de la prise de courant (1).

10. Procédé d'échange d'énergie entre un réseau électrique et un consommateur,
dans lequel, par l'intermédiaire d'une station de charge stationnaire, une liaison d'énergie est établie entre le réseau électrique et un point d'alimentation, la station de charge comprenant un contrôleur de station de charge, pour envoyer et recevoir des signaux de commande sur une ligne de transmission de signaux, et
dans lequel, par l'intermédiaire d'une station SIM installée côté consommateur, une liaison d'énergie est établie entre le consommateur et ledit point d'alimentation, la station SIM comprenant un contrôleur SIM, pour envoyer et recevoir des signaux de commande par l'intermédiaire de la ligne de transmission de signaux,
**caractérisé en ce que**
le contrôleur SIM envoie au contrôleur de station de charge, selon des espacements temporels, par l'intermédiaire de la ligne de transmission de signaux, une identification SIM répétitive et une identification SIM associée à la station de charge,
**en ce que** le contrôleur de station de charge, à réception d'une identification SIM, additionne une quantité d'énergie, échangée par l'intermédiaire de la liaison d'énergie, entre le réseau électrique et le consommateur, à un compteur de quantité d'énergie associé à l'identification SIM, et
et **en ce que** les espacements temporels sont de valeur telle que la quantité d'énergie, échangée par l'intermédiaire de la liaison d'énergie dans un espacement temporel entre le réseau électrique et le consommateur, est inférieure à une résolution de mesure du compteur de quantité d'énergie.

11. Station SIM d'un dispositif d'échange d'énergie contrôlé entre un réseau électrique et un consommateur selon l'une des revendications 1 à 9, la station de charge convenant pour établir une liaison d'énergie entre le consommateur et un point d'alimentation situé côté réseau électrique et comprenant un contrôleur SIM, pour envoyer et recevoir des signaux de commande par l'intermédiaire d'une ligne de transmission de signaux,
**caractérisé en ce que**
le contrôleur SIM envoie, selon des espacements temporels, par l'intermédiaire de la ligne de transmission de signaux, une identification SIM répétitive et une identification SIM associée à la station de charge, pour commander un compteur de quantité d'énergie associé à l'identification SIM, et
**en ce que** les espacements temporels sont de valeur telle que la quantité d'énergie, échangée par l'intermédiaire de la ligne de transmission de signaux dans un espacement temporel entre le réseau électrique et le consommateur, est inférieure à une résolution de mesure prédéterminée du compteur de quantité d'énergie.

12. Station d'énergie stationnaire d'un dispositif d'échange d'énergie contrôlé entre un réseau électrique et un consommateur selon l'une des revendications 1 à 9, la station de charge stationnaire convenant pour établir une liaison d'énergie entre le réseau électrique et un point d'alimentation situé côté consommateur et comprenant un contrôleur de station de charge, pour envoyer et recevoir des signaux de commande par l'intermédiaire d'une ligne de transmission de signaux,
**caractérisé en ce que**
les signaux de commande, reçus par l'intermédiaire de la ligne de transmission de signaux, comprennent une identification SIM répétitive selon des espacements temporels et une identification SIM associée au consommateur,
**en ce que** le contrôleur de station de charge, à réception d'une identification SIM, additionne une quantité d'énergie, échangée par l'intermédiaire de la liaison d'énergie, entre le réseau électrique et le consommateur, à un compteur de quantité d'énergie associé à l'identification SIM, et
et **en ce que** les espacements temporels sont de valeur telle que la quantité d'énergie, échangée par l'intermédiaire de la liaison d'énergie dans un espacement temporel entre le réseau électrique et le consommateur, est inférieure à une résolution de mesure du compteur de quantité d'énergie.
